# EUROPÄISCHE PATENTSCHRIFT

(11) **EP 3 237 261 B1**
(45) Veröffentlichungstag und Bekanntmachung des Hinweises auf die Patenterteilung: **14.04.2021**
(21) Anmeldenummer: 16705913.8
(22) Anmeldetag: 08.02.2016
(51) Int. Cl.: B61C 3/00, B60L 3/04

(54) **FAHRZEUG, INSBESONDERE SCHIENENFAHRZEUG, MIT ANTRIEBSSTEUEREINRICHTUNG**
VEHICLE, IN PARTICULAR RAIL VEHICLE, COMPRISING A DRIVE CONTROLLER
VÉHICULE, NOTAMMENT VÉHICULE FERROVIAIRE COMPORTANT UN DISPOSITIF DE COMMANDE DE GROUPE D'ENTRAÎNEMENT

(30) Priorität: 24.02.2015 DE 102015203303
(43) Veröffentlichungstag der Anmeldung: 01.11.2017
(60) Teilanmeldung: 19000033.1
(73) Patentinhaber: Siemens Mobility GmbH, 81739 München (DE)
(72) Erfinder: HILPERT, Johannes, 96129 Strullendorf (DE)
(86) Internationale Anmeldenummer: PCT/EP2016/052617
(87) Internationale Veröffentlichungsnummer: WO 2016/134964

(56) Entgegenhaltungen:
- EP-A1- 2 755 320
- DE-A1-102005 045 603
- US-A1- 2009 256 514
- US-A1- 2010 162 918
- US-A1- 2014 365 046
- US-B1- 7 026 776

## Beschreibung

Fahrzeug, insbesondere Schienenfahrzeug, mit Antriebssteuereinrichtung

Die Erfindung bezieht sich auf ein Fahrzeug mit den Merkmalen gemäß dem Oberbegriff des Patentanspruchs 1. Ein derartiges Fahrzeug ist aus der deutschen Offenlegungsschrift DE 10 2005 045 603 A1 bekannt.

Der Erfindung liegt die Aufgabe zugrunde, ein Fahrzeug, insbesondere Schienenfahrzeug anzugeben, das gegenüber herkömmlichen Fahrzeugen vergleichbarer Art ein höheres Maß an Sicherheit gewährleistet.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass eine Überwachungseinrichtung derart ausgestaltet ist, dass sie den Antriebsstrom des Antriebs quantitativ erfasst und den Antrieb abschaltet, wenn zumindest eine Antriebsausschaltbedingung erfüllt ist und gleichzeitig ein den Antriebsstrom angebender Antriebsstrommesswert einen aktiven Antriebsbetrieb des Antriebs anzeigt.

Ein wesentlicher Vorteil des erfindungsgemäßen Fahrzeugs ist darin zu sehen, dass durch die zusätzlich zur Antriebssteuereinrichtung vorgesehenen Überwachungseinrichtungen ein höheres Maß an Betriebssicherheit als bei herkömmlichen Fahrzeugen erreicht wird. Dies ist darauf zurückzuführen, dass ein aktiver Antriebsbetrieb von der Überwachungseinrichtung erfindungsgemäß unterbunden wird, wenn zumindest eine Antriebsausschaltbedingung erfüllt ist, und zwar unabhängig von der parallelen bzw. zeitgleichen Ansteuerung durch die Antriebssteuereinrichtung.

Weist der Antrieb zwei oder mehr Motoren auf, so wird es als vorteilhaft angesehen, wenn die Überwachungseinrichtung ein Stromerfassungsmodul aufweist, das den Antriebsstrommesswert durch Summenbildung von Motorstrommesswerten, die die durch die Motoren fließenden Motorströme angeben, bildet.

Vorzugsweise ist das Stromerfassungsmodul derart ausgestaltet, dass es die Summenbildung vorzeichenbezogen unter Berücksichtung der jeweiligen Stromrichtung der Motorströme durchführt, wobei Motorströme, deren Stromrichtung einen Energieverbrauch des jeweiligen Motors anzeigt, mit einem anderen Vorzeichen berücksichtigt werden als Motorströme, deren Stromrichtung eine Energieerzeugung des jeweiligen Motors anzeigt. Mit anderen Worten ist es vorteilhaft, wenn das Stromerfassungsmodul derart ausgestaltet ist, dass es die Motorstrommesswerte von Motoren, die sich im Antriebsbetrieb befinden, bei der Addition mit einem anderen Vorzeichen berücksichtigt als die Motorstrommesswerte von Motoren, die sich im Bremsbetrieb befinden und eine gegenüber dem Antriebsbetrieb inverse Stromrichtung aufweisen.

Vorzugsweise weist die Überwachungseinrichtung ein Traktionsabschaltmodul auf, das derart ausgestaltet ist, dass es das Vorzeichen des durch Summenbildung gebildeten Antriebsstrommesswerts auswertet und den Antrieb abschaltet, wenn zumindest eine Antriebsausschaltbedingung erfüllt ist und das Vorzeichen des Antriebsstrommesswerts den aktiven Antriebsbetriebs der Motoren insgesamt (- bzw. in der Summe gesehen -) anzeigt.

Vorzugsweise weist das Traktionsabschaltmodul einen Signaleingang zur Eingabe eines Schnellbremssignals, das im Falle einer Schnellbremsung eine solche anzeigt, auf, und prüft das Vorliegen der zumindest einen Antriebsausschaltbedingung zumindest auch anhand dieses Schnellbremssignals.

Darüber hinaus wird es als vorteilhaft angesehen, wenn das Traktionsabschaltmodul einen Signaleingang zur Eingabe eines Fernsteuerungssignals, das im Falle einer Fernsteuerung des Fahrzeugs eine solche anzeigt, aufweist und das Vorliegen der zumindest einen Antriebsausschaltbedingung zumindest auch anhand dieses Fernsteuerungssignals prüft.

Auch ist es vorteilhaft, wenn das Traktionsabschaltmodul einen Signaleingang zur Eingabe eines Besetztsignals, das im Fall eines besetzten Führerraums einen solchen anzeigt, sowie einen Signaleingang zur Eingabe eines

Traktionsfreigabesignals, das im Falle eines Vorliegens eines führerseitigen Antriebsbefehls einen solchen anzeigt, aufweist und das Vorliegen der zumindest einen Antriebsausschaltbedingung zumindest auch anhand dieser beiden genannten Signale prüft.

Die Überwachungseinrichtung weist bevorzugt ein Bremsleistungsberechnungsmodul auf, das zumindest auch anhand des Antriebsstrommesswerts, insbesondere anhand des durch Summenbildung der Motorstrommesswerte gebildeten Antriebsstrommesswerts, einen Bremsleistungswert der Motoren ermittelt.

Weist das Fahrzeug einen den oder die Motoren des Antriebs mit elektrischer Energie versorgenden Gleichspannungszwischenkreis auf, so wird es als vorteilhaft angesehen, wenn das Bremsleistungsberechnungsmodul anhand des Antriebsstrommesswerts, insbesondere anhand des durch Summenbildung der Motorstrommesswerte gebildeten Antriebsstrommesswerts, und einem die Spannung im Gleichspannungszwischenkreis angebenden Spannungsmesswert den Bremsleistungswert der Motoren ermittelt.

Vorteilhaft ist es, wenn das Bremsleistungsberechnungsmodul mittelbar oder unmittelbar mit einer Bremssteuereinrichtung des Fahrzeugs in Verbindung steht und diese den Bremsleistungswert der Motoren übermittelt.

Mit Blick auf ein schnelles und zuverlässiges Abschalten des Antriebs wird es als vorteilhaft angesehen, wenn das Fahrzeug einen elektrischen Schalter aufweist, der im geschlossenen Zustand den Antrieb mit einem Energieversorgungsanschluss des Fahrzeugs verbindet und im geöffneten Zustand den Antrieb von dem Energieversorgungsanschluss trennt, und die Überwachungseinrichtung mit dem elektrischen Schalter in Verbindung steht und diesen mittels eines Steuersignals öffnet, wenn die zumindest eine Antriebsausschaltbedingung erfüllt ist und gleichzeitig der Antriebsstrommesswert den aktiven Antriebsbetrieb des Antriebs anzeigt.

Das Stromerfassungsmodul, das Traktionsabschaltmodul und das Bremsleistungsberechnungsmodul können durch Hardwaremodule gebildet sein. Alternativ kann vorgesehen sein, dass die Überwachungseinrichtung durch eine Recheneinrichtung gebildet ist, bei der das Stromerfassungsmodul, das Traktionsabschaltmodul und/oder das Bremsleistungsberechnungsmodul durch Softwaremodule gebildet sind, die in einem Speicher der Recheneinrichtung gespeichert und von einem oder mehreren Rechenprozessoren der Recheneinrichtung ausgeführt werden.

Die Erfindung bezieht sich darüber hinaus auf ein Verfahren zum Betreiben eines Fahrzeug, insbesondere Schienenfahrzeugs, das einen Antrieb und eine mit dem Antrieb in Verbindung stehende und diese ansteuernde Antriebssteuereinrichtung aufweist.

Erfindungsgemäß ist bezüglich eines solchen Verfahrens vorgesehen, dass zusätzlich zu der Antriebssteuereinrichtung eine Überwachungseinrichtung unabhängig von der Antriebssteuereinrichtung betrieben wird, und zwar derart, dass mit dieser der Antriebsstrom des Antriebs quantitativ erfasst und der Antrieb abgeschaltet wird, wenn zumindest eine Antriebsausschaltbedingung erfüllt ist und gleichzeitig ein den Antriebsstrom angebender Antriebsstrommesswert einen aktiven Antriebsbetrieb des Antriebs anzeigt.

Bezüglich der Vorteile des erfindungsgemäßen Verfahrens sei auf die obigen Ausführungen im Zusammenhang mit dem erfindungsgemäßen Fahrzeug verwiesen, da die Vorteile des erfindungsgemäßen Fahrzeugs denen des erfindungsgemäßen Verfahrens im Wesentlichen entsprechen.

Die Erfindung wird nachfolgend anhand von Ausführungsbeispielen näher erläutert; dabei zeigen beispielhaft
- Figur 1: ein Ausführungsbeispiel für ein erfindungsgemäßes Schienenfahrzeug, bei dem ein Antrieb zwei Motoren aufweist, die jeweils mit einem individuell zugeordneten Wechselrichter mit Motorstrom versorgt werden,
- Figur 2: ein Ausführungsbeispiel für ein erfindungsgemäßes Schienenfahrzeug, bei dem ein Antrieb lediglich einen einzigen Motor aufweist, und
- Figur 3: ein Ausführungsbeispiel für ein erfindungsgemäßes Schienenfahrzeug, bei dem ein Antrieb zwei Motoren aufweist, die von ein und demselben Wechselrichter mit Motorstrom versorgt werden.

In den Figuren werden der Übersicht halber für identische oder vergleichbare Komponenten stets dieselben Bezugszeichen verwendet.

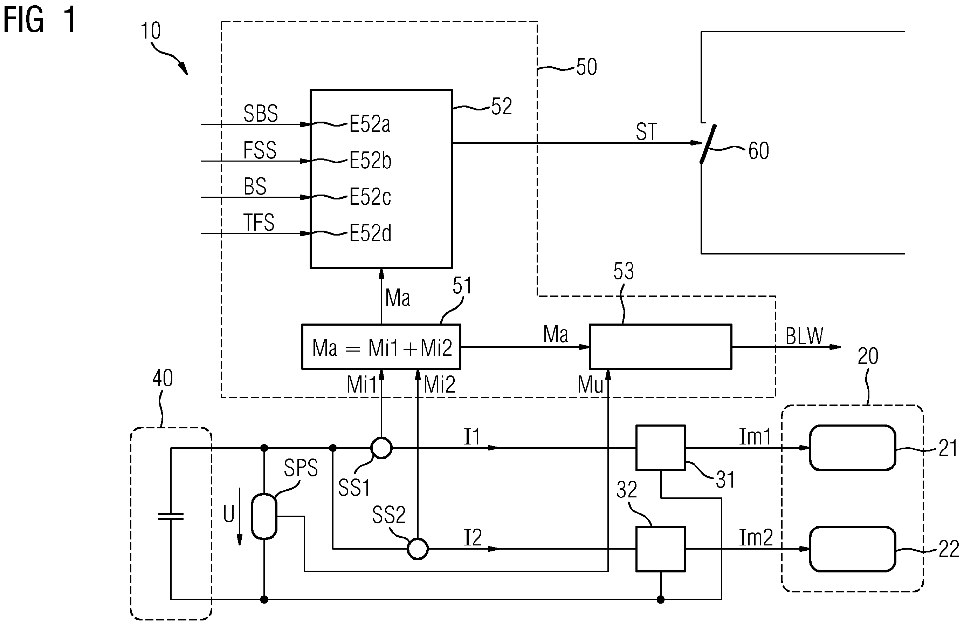

Die Figur 1 zeigt Betriebskomponenten eines Schienenfahrzeugs 10 in einer schematischen Darstellung. Man erkennt einen Antrieb 20, der zwei Motoren 21 und 22 aufweist. Die beiden Motoren 21 und 22 werden von Wechselrichtern 31 und 32 mit Motorstrom Iml und Im2 versorgt.

Die beiden Wechselrichter 31 und 32 stehen mit einem Gleichspannungszwischenkreis 40 in Verbindung, der die beiden Wechselrichter 31 und 32 mit elektrischer Energie versorgt. Die von dem Gleichspannungszwischenkreis 40 in die beiden Wechselrichter 31 und 32 eingespeisten Eingangsströme sind in der Figur 1 mit den Bezugszeichen I1 und I2 bezeichnet.

Die Speisung des Gleichspannungszwischenkreises 40 mit elektrischer Energie ist prinzipiell beliebig und daher in der Figur 1 nicht weiter dargestellt. Beispielsweise kann der Gleichspannungszwischenkreis 40 von einem Gleichrichter gespeist werden, der mit einem elektrischen Transformator in Verbindung steht, und der Transformator kann mit einem Stromabnehmer des Schienenfahrzeugs verbunden sein.

Die Ansteuerung der beiden Motoren 21 und 22 des Antriebs 20 erfolgt bei dem Schienenfahrzeug 10 gemäß Figur 1 mittels einer Antriebssteuereinrichtung, die aus Gründen der Übersicht nicht näher dargestellt ist. Zusätzlich zu dieser in der Figur 1 nicht dargestellten Antriebssteuereinrichtung weist das Schienenfahrzeug 10 eine Überwachungseinrichtung 50 auf, die unabhängig von der Antriebssteuereinrichtung, also parallel zu dieser, arbeitet.

Wie weiter unten noch näher im Detail erläutert werden wird, ist die Überwachungseinrichtung 50 derart ausgestaltet, dass sie den Antriebsstrom, der in den Antrieb 20 hineinfließt, quantitativ erfasst und den Antrieb 20 abschaltet, wenn zumindest eine Antriebsausschaltbedingung erfüllt ist und gleichzeitig ein den Antriebsstrom angebender Antriebsstrommesswert Ma einen aktiven Antriebsbetrieb des Antriebs anzeigt.

Zur Ermittlung des Antriebsstrommesswerts Ma bzw. zur Ermittlung des Antriebsstroms, der in den Antrieb 20 hineinfließt, ist die Überwachungseinrichtung 50 mit einem Stromerfassungsmodul 51 ausgestattet. Das Stromerfassungsmodul 51 steht mit Stromsensoren SS1 und SS2 in Verbindung, die die Eingangsströme I1 und I2, die in die beiden Wechselrichter 31 und 32 hineinfließen, messen.

Die in die Wechselrichter 31 und 32 hineinfließenden Eingangsströme I1 und I2 geben die durch die Motoren fließenden Motorströme Iml und Im2 quantitativ an, so dass die von den beiden Stromsensoren SS1 und SS2 gebildeten Messwerte Motorstrommesswerte für die beiden Motoren 21 und 22 des Antriebs 20 bilden. Die Motorstrommesswerte, die die Stromsensoren SS1 und SS2 erzeugen und in das Stromerfassungsmodul 51 einspeisen, sind in der Figur 1 mit den Bezugszeichen Mil und Mi2 gekennzeichnet.

Das Stromerfassungsmodul 51 der Überwachungseinrichtung 50 ist als Summenbildner ausgestaltet und somit in der Lage, die Motorstrommesswerte Mil und Mi2 vorzeichengerecht und damit unter Berücksichtigung der Stromrichtung zu addieren und durch Summenbildung der Motorstrommesswerte Mil und Mi2 den Antriebsstrommesswert Ma zu bilden, der den in den Antrieb 20 hinein- oder herausfließenden Antriebsstrom angibt.

Mit dem Stromerfassungsmodul 51 steht ein Traktionsabschaltmodul 52 der Überwachungseinrichtung 50 in Verbindung. Das Traktionsabschaltmodul 52 wertet den Antriebsstrommesswert Ma aus und schaltet den Antrieb 20 bzw. die beiden Motoren 21 und 22 ab, wenn der Antriebsstrommesswert Ma einen aktiven Antriebsbetrieb des Antriebs 20 anzeigt und gleichzeitig eine Antriebsausschaltbedingung erfüllt ist.

Zur Feststellung des Antriebsbetriebs des Antriebs 20 wertet das Traktionsabschaltmodul 52 das Vorzeichen des Antriebsstrommesswerts Ma aus; denn das Vorzeichen des Antriebsstrommesswerts Ma gibt an, ob der Antrieb 20 in der Summe das Schienenfahrzeug 10 antreibt oder bremst. Wird nämlich in der Summe mehr Motorstrom verbraucht, als generiert wird, so arbeitet der Antrieb 20 als Energieverbraucher und somit als aktive Antriebskomponente. Wird in der Summe von den Motoren 21 und 22 mehr Generatorstrom erzeugt, als zum Antrieb verbraucht wird, so arbeitet der Antrieb 20 in der Summe als Bremse.

Zur Prüfung der erwähnten Antriebsausschaltbedingung weist das Traktionsabschaltmodul 52 vier Signaleingänge E52a, E52b, E52c und E52d auf.

Der Signaleingang E52a dient zur Eingabe eines Schnellbremssignals SBS, das im Falle einer Schnellbremsung des Schienenfahrzeugs 10 eine solche anzeigt.

Der Signaleingang E52b des Traktionsabschaltmoduls 52 dient zur Eingabe eines Fernsteuerungssignals FSS, das im Falle einer aktiven Fernsteuerung des Schienenfahrzeugs eine solche anzeigt.

Der Signaleingang E52c des Traktionsabschaltmoduls 52 dient zur Eingabe eines Besetztsignals BS, das im Falle eines besetzten Führerraums des Schienenfahrzeugs 10 einen solchen anzeigt.

Der Signaleingang E52d dient zur Eingabe eines Traktionsfreigabesignals TFS, das im Falle eines Vorliegens eines führerseitigen Antriebsbefehls einen solchen anzeigt.

Das Traktionsabschaltmodul 52 wertet die Signale an den vier Signaleingängen E52a bis E52d aus und prüft gleichzeitig anhand des Antriebsstrommesswerts Ma, ob ein aktiver Antriebsbetrieb des Antriebs 20 vorliegt.

Stellt das Traktionsabschaltmodul 52 fest, dass der Antriebsstrommesswert Ma einen aktiven Antriebsbetrieb des Antriebs anzeigt und gleichzeitig das Schnellbremssignal SBS eine Schnellbremsung anzeigt, so erzeugt sie ein Steuersignal ST, mit dem ein Schalter 60 geöffnet wird.

Der Schalter 60 verbindet im geschlossenen Zustand den Antrieb 20 des Schienenfahrzeugs 10 mit einem nicht gezeigten Energieversorgungsanschluss des Schienenfahrzeugs 10 und trennt im geöffneten Zustand den Antrieb 20 von diesem Energieversorgungsanschluss. Durch das Erzeugen des Steuersignals ST bzw. durch das Öffnen des Schalters 60 wird ein Abschalten des Antriebs 20 unabhängig davon erzwungen, ob die Antriebssteuereinrichtung den Antrieb 20 weiter aktiv betreiben will oder nicht. Die Überwachungseinrichtung 50 bildet somit eine unabhängige Komponente, die unabhängig von der Antriebssteuereinrichtung den Antrieb 20 abschalten kann, wenn dies aus betrieblicher Sicht erforderlich ist.

Das Traktionsabschaltmodul 52 erzeugt das Steuersignal ST zum Öffnen des Schalters 60 ebenfalls, wenn im Falle eines aktiven Antriebsbetriebs des Antriebs 20 kein zulässiges bzw. aktives Fernsteuerungssignal FSS vorliegt und das Besetztsignal BSS einen unbesetzten Führerraum anzeigt.

Die Überwachungseinrichtung 50 ist bei dem Schienenfahrzeug 10 gemäß Figur 1 außerdem mit einem Bremsleistungsberechnungsmodul 53 ausgestattet, das den Antriebstrommesswert Ma des Stromerfassungsmoduls 51 auswertet. Das Bremsleistungsberechnungsmodul 53 steht über einen Spannungssensor SPS mit dem Gleichspannungszwischenkreis 40 in Verbindung und misst die Ausgangsspannung U des Gleichspannungszwischenkreises 40. Der Spannungsmesswert, der die Spannung U angibt, ist in der Figur 1 mit dem Bezugszeichen Mu gekennzeichnet.

Das Bremsleistungsberechnungsmodul 53 wertet den Antriebsstrommesswert Ma des Stromerfassungsmoduls 51 sowie den Spannungsmesswert Mu des Spannungssensors SPS aus und ermittelt anhand dieser beiden Messwerte im Falle eines Generatorbetriebs des Antriebs 20 einen Bremsleistungswert BLW, der die jeweilige Bremsleistung des Antriebs 20 anzeigt. Die Berechnung der Bremsleistung ist möglich, weil der Antriebsstrommesswert Ma und der Spannungsmesswert Mu eine Ermittlung der in Richtung des Gleichspannungszwischenkreises 40 gespeisten elektrischen Leistung angibt, die ein Maß für die Bremsleistung ist.

Der von dem Bremsleistungsberechnungsmodul 53 erzeugte Bremsleistungswert BLW kann in eine in der Figur 1 nicht gezeigte Bremssteuereinrichtung des Schienenfahrzeugs 10 eingespeist werden, das die Steuerung des Bremssystems des Schienenfahrzeugs 10 durchführt.

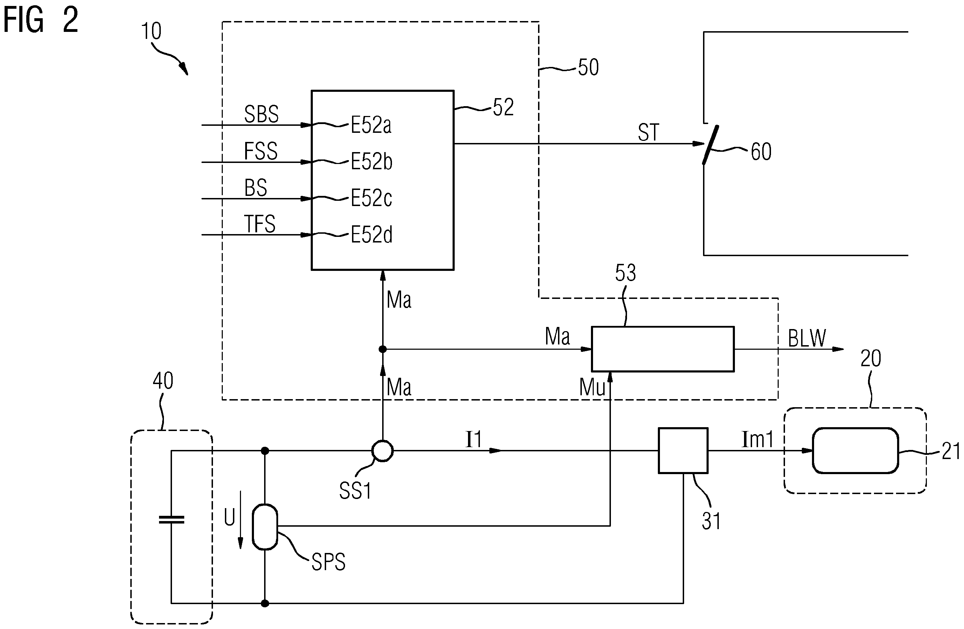

Die Figur 2 zeigt ein Ausführungsbeispiel für ein Schienenfahrzeug 10, bei dem ein Antrieb 20 lediglich einen einzigen Motor 21 aufweist. Der Motor 21 wird von einem Wechselrichter 31 mit einem Motorstrom Iml versorgt. Die Stromversorgung des Wechselrichters 31 erfolgt durch einen Gleichspannungszwischenkreis 40, der einen Eingangsstrom I1 in den Wechselrichter 31 einspeist.

Da bei dem Ausführungsbeispiel gemäß Figur 2 lediglich ein Motor 21 vorhanden ist, kann die Überwachungseinrichtung 50 ohne ein Stromerfassungsmodul, wie das Stromerfassungsmodul 51 gemäß Figur 1, auskommen. Der von dem Stromsensor SS1 erzeugte Motorstrommesswert Mil bildet somit unmittelbar den Antriebsstrommesswert Ma des Antriebs 20 und kann von dem Traktionsabschaltmodul 52 unmittelbar zur Bildung des Steuersignals ST herangezogen werden.

Im Übrigen gelten die Ausführungen im Zusammenhang mit dem Ausführungsbeispiel gemäß Figur 1 bei dem Schienenfahrzeug 10 gemäß Figur 2 entsprechend.

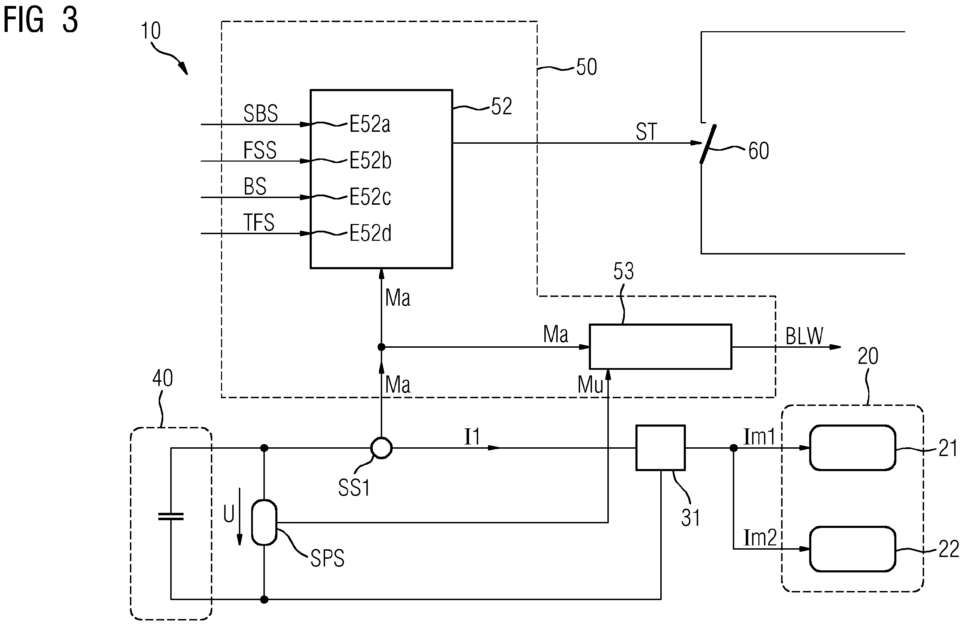

Die Figur 3 zeigt ein Ausführungsbeispiel für ein Schienenfahrzeug 10, bei dem ein Antrieb 20 zwei Motoren 21 und 22 aufweist. Die Motorströme Iml und Im2 der beiden Motoren 21 und 22 werden von ein und demselben Wechselrichter 31 erzeugt, der eingangsseitig mit einem Gleichspannungszwischenkreis 40 in Verbindung steht und von diesem mit einem Eingangsstrom I1 versorgt wird.

Ein Stromsensor SS1 misst den Eingangsstrom I1 in den Wechselrichter 31 und erzeugt damit unmittelbar einen Antriebsstrommesswert Ma, der den Antriebsstrom des Antriebs 20 angibt. Eine rechentechnische Summenbildung von einzelnen Motorstrommesswerten ist bei dem Ausführungsbeispiel gemäß Figur 3 nicht erforderlich, da der Eingangsstrom I1 in den Wechselrichter 31 bereits einen Summenwert, der die Stromsumme der Motorströme Iml und Im2 angibt, darstellt.

Im Übrigen gelten die Erläuterungen im Zusammenhang mit dem Ausführungsbeispiel gemäß Figur 2 für das Ausführungsbeispiel gemäß Figur 3 entsprechend.

Bei den Ausführungsvarianten gemäß den Figuren 1 bis 3 können das Stromerfassungsmodul 51, das Traktionsabschaltmodul 52 und das Bremsleistungsberechnungsmodul 53 durch Hardwaremodule gebildet sein. Vorteilhaft ist es jedoch, wenn die Überwachungseinrichtung 50 durch eine Recheneinrichtung gebildet ist, bei der das Stromerfassungsmodul 51, das Traktionsabschaltmodul 52 und das Bremsleistungsberechnungsmodul 53 durch Softwaremodule gebildet sind, die in einem Speicher der Recheneinrichtung gespeichert und von einem oder mehreren Rechenprozessoren der Recheneinrichtung ausgeführt werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Schienenfahrzeug
- 20: Antrieb
- 21: Motor
- 22: Motor
- 31: Wechselrichter
- 32: Wechselrichter
- 40: Gleichspannungszwischenkreis
- 50: Überwachungseinrichtung
- 51: Stromerfassungsmodul
- 52: Traktionsabschaltmodul
- 53: Bremsleistungsberechnungsmodul
- 60: Schalter
- BLW: Bremsleistungswert
- BS: Besetztsignal
- E52a: Signaleingang
- E52b: Signaleingang
- E52c: Signaleingang
- E52d: Signaleingang
- FSS: Fernsteuerungssignal
- Im1: Motorstrom
- Im2: Motorstrom
- I1: Eingangsstrom
- I2: Eingangsstrom
- Ma: Antriebsstrommesswert
- Mi1: Motorstrommesswert
- Mi2: Motorstrommesswert
- Mu: Spannungsmesswert
- SBS: Schnellbremssignal
- SPS: Spannungssensor
- SS1: Stromsensor
- SS2: Stromsensor
- ST: Steuersignal
- TFS: Traktionsfreigabesignal
- U: Ausgangsspannung

## Patentansprüche

1. Fahrzeug, insbesondere Schienenfahrzeug (10), mit einem einen oder mehrere elektrische Motoren (21, 22) aufweisenden Antrieb (20), einer mit dem Antrieb (20) in Verbindung stehenden und diesen ansteuernden Antriebssteuereinrichtung und einer Überwachungseinrichtung (50), die unabhängig von der Antriebssteuereinrichtung arbeitet,
**dadurch gekennzeichnet, dass** die Überwachungseinrichtung (50) derart ausgestaltet ist, dass sie
- den Antriebsstrom des Antriebs (20) quantitativ erfasst und das Vorzeichen eines den Antriebsstrom angebenden Antriebsstrommesswerts (Ma) auswertet, wobei das Vorzeichen des Antriebsstrommesswerts (Ma) angibt, ob der Antrieb (20) das Schienenfahrzeug (10) antreibt oder bremst, und
- den Antrieb (20) abschaltet, wenn zumindest eine Antriebsausschaltbedingung erfüllt ist und gleichzeitig das Vorzeichen des Antriebsstrommesswerts (Ma) einen aktiven, das Schienenfahrzeug antreibenden Antriebsbetrieb des Antriebs (20) anzeigt.

2. Fahrzeug nach Anspruch 1,
**dadurch gekennzeichnet, dass**
- der Antrieb (20) zwei oder mehr Motoren (21, 22) aufweist und
- die Überwachungseinrichtung (50) ein Stromerfassungsmodul (51) aufweist, das den Antriebsstrommesswert (Ma) durch Summenbildung von Motorstrommesswerten (Mil, Mi2), die die durch die Motoren (21, 22) fließenden Motorströme (Im1, Im2) angeben, bildet.

3. Fahrzeug nach Anspruch 2,
**dadurch gekennzeichnet, dass** das Stromerfassungsmodul (51) derart ausgestaltet ist, dass es die Summenbildung vorzeichenbezogen unter Berücksichtung der jeweiligen Stromrichtung der Motorströme (Im1, Im2) durchführt, wobei Motorströme (Im1, Im2), deren Stromrichtung einen Energieverbrauch des jeweiligen Motors (21, 22) anzeigt, mit einem anderen Vorzeichen berücksichtigt werden als Motorströme (Im1, Im2), deren Stromrichtung eine Energieerzeugung des jeweiligen Motors (21, 22) anzeigt.

4. Fahrzeug nach einem der voranstehenden Ansprüche,
**dadurch gekennzeichnet, dass** das Stromerfassungsmodul (51) derart ausgestaltet ist, dass es die Motorstrommesswerte (Mil, Mi2) von Motoren (21, 22), die sich im Antriebsbetrieb befinden, bei der Addition mit einem anderen Vorzeichen berücksichtigt als die Motorstrommesswerte (Mil, Mi2) von Motoren (21, 22), die sich im Bremsbetrieb befinden und eine gegenüber dem Antriebsbetrieb inverse Stromrichtung aufweisen.

5. Fahrzeug nach einem der voranstehenden Ansprüche,
**dadurch gekennzeichnet, dass** die Überwachungseinrichtung (50) ein Traktionsabschaltmodul (52) aufweist, das derart ausgestaltet ist, dass es das Vorzeichen des durch Summenbildung gebildeten Antriebsstrommesswerts (Ma) auswertet und den Antrieb (20) abschaltet, wenn zumindest eine Antriebsausschaltbedingung erfüllt ist und das Vorzeichen des Antriebsstrommesswerts (Ma) den aktiven Antriebsbetrieb der Motoren (21, 22) insgesamt anzeigt.

6. Fahrzeug nach einem der voranstehenden Ansprüche,
**dadurch gekennzeichnet, dass** das Traktionsabschaltmodul (52) einen Signaleingang (E52a) zur Eingabe eines Schnellbremssignals (SBS), das im Falle einer Schnellbremsung eine solche anzeigt, aufweist und das Vorliegen der zumindest einen Antriebsausschaltbedingung zumindest auch anhand dieses Schnellbremssignals (SBS) prüft.

7. Fahrzeug nach einem der voranstehenden Ansprüche,
**dadurch gekennzeichnet, dass** das Traktionsabschaltmodul (52) einen Signaleingang (E52b) zur Eingabe eines Fernsteuerungssignals (FSS), das im Falle einer Fernsteuerung des Fahrzeugs eine solche anzeigt, aufweist und das Vorliegen der zumindest einen Antriebsausschaltbedingung zumindest auch anhand dieses Fernsteuerungssignals (FSS) prüft.

8. Fahrzeug nach einem der voranstehenden Ansprüche,
**dadurch gekennzeichnet, dass** das Traktionsabschaltmodul (52) einen Signaleingang (E52c) zur Eingabe eines Besetztsignals (BS), das im Fall eines besetzten Führerraums einen solchen anzeigt, sowie einen Signaleingang (E52d) zur Eingabe eines Traktionsfreigabesignals (TFS), das im Falle eines Vorliegens eines führerseitigen Antriebsbefehls einen solchen anzeigt, aufweist und das Vorliegen der zumindest einen Antriebsausschaltbedingung zumindest auch anhand dieser beiden genannten Signale prüft.

9. Fahrzeug nach einem der voranstehenden Ansprüche,
**dadurch gekennzeichnet, dass** die Überwachungseinrichtung (50) ein Bremsleistungsberechnungsmodul (53) aufweist, das zumindest auch anhand des Antriebsstrommesswerts (Ma) einen Bremsleistungswert (BLW) der Motoren (21, 22) ermittelt.

10. Fahrzeug nach einem der voranstehenden Ansprüche,
**dadurch gekennzeichnet, dass**
- das Fahrzeug einen den oder die Motoren (21, 22) mit elektrischer Energie versorgenden Gleichspannungszwischenkreis (40) aufweist und
- das Fahrzeug ein Bremsleistungsberechnungsmodul (53) aufweist, das anhand des Antriebsstrommesswerts (Ma) und einem die Spannung (U) im Gleichspannungszwischenkreis (40) angebenden Spannungsmesswert (Mu) einen Bremsleistungswert (BLW) der Motoren (21, 22) ermittelt.

11. Fahrzeug nach einem der voranstehenden Ansprüche,
**dadurch gekennzeichnet, dass** das Bremsleistungsberechnungsmodul (53) mittelbar oder unmittelbar mit einer Bremssteuereinrichtung des Fahrzeugs in Verbindung steht und dieser den Bremsleistungswert (BLW) der Motoren (21, 22) übermittelt.

12. Fahrzeug nach einem der voranstehenden Ansprüche,
**dadurch gekennzeichnet, dass**
- das Fahrzeug einen elektrischen Schalter (60) aufweist, der im geschlossenen Zustand den Antrieb (20) mit einem Energieversorgungsanschluss des Fahrzeugs verbindet und im geöffneten Zustand den Antrieb (20) von dem Energieversorgungsanschluss trennt, und
- die Überwachungseinrichtung (50) mit dem elektrischen Schalter (60) in Verbindung steht und diesen mittels eines Steuersignals (ST) öffnet, wenn die zumindest eine Antriebsausschaltbedingung erfüllt ist und gleichzeitig der Antriebsstrommesswert (Ma) den aktiven Antriebsbetrieb des Antriebs (20) anzeigt.

13. Verfahren zum Betreiben eines Fahrzeugs, insbesondere Schienenfahrzeugs, das einen Antrieb (20) und eine mit dem Antrieb (20) in Verbindung stehende und diesen ansteuernde Antriebssteuereinrichtung aufweist, wobei zusätzlich zu der Antriebssteuereinrichtung eine Überwachungseinrichtung (50) unabhängig von der Antriebssteuereinrichtung betrieben wird, **dadurch gekennzeichnet, dass** die Überwachungseinrichtung (50) derart betrieben wird, dass mit dieser der Antriebsstrom des Antriebs (20) quantitativ erfasst und das Vorzeichen eines den Antriebsstrom angebenden Antriebsstrommesswerts (Ma) ausgewertet wird, wobei das Vorzeichen des Antriebsstrommesswerts (Ma) angibt, ob der Antrieb (20) das Schienenfahrzeug (10) antreibt oder bremst, und der Antrieb (20) abgeschaltet wird, wenn zumindest eine Antriebsausschaltbedingung erfüllt ist und gleichzeitig das Vorzeichen des Antriebsstrommesswerts (Ma) einen aktiven, das Schienenfahrzeug antreibenden Antriebsbetrieb des Antriebs (20) anzeigt.

## Claims

1. Vehicle, in particular a rail vehicle (10), with a drive (20) having one or more electric motors (21, 22), a drive controller connected to the drive (20) and controlling it, and a monitoring device (50) which works independently of the drive controller,
**characterised in that**
the monitoring device (50) is designed such that it
- quantitatively detects the drive current of the drive (20) and evaluates the sign of a drive current measured value (Ma) indicating the drive current, wherein the sign of the drive current measured value (Ma) indicates whether the drive (20) is driving or braking the rail vehicle (10), and
- switches off the drive (20) when at least one drive switch-off condition is met and at the same time the sign of the drive current measured value (Ma) indicates an active drive mode of the drive (20) driving the rail vehicle.

2. Vehicle according to claim 1,
**characterised in that**
- the drive (20) has two or more motors (21, 22) and
- the monitoring device (50) has a current detection module (51) which forms the drive current measured value (Ma) by summation of motor current measured values (Mil, Mi2) indicating the motor currents (Im1, Im2) flowing through the motors (21, 22).

3. Vehicle according to claim 2,
**characterised in that**
the current detection module (51) is designed such that it carries out the summation based on the sign, taking into account the respective current direction of the motor currents (Im1, Im2), wherein motor currents (Im1, Im2) whose current direction indicates an energy consumption by the respective motor (21, 22) are taken into account with a sign different from motor currents (Im1, Im2) whose current direction indicates generation of energy by the respective motor (21, 22) .

4. Vehicle according to one of the preceding claims,
**characterised in that**
the current detection module (51) is designed such that during the addition it takes into account the motor current measured values (Mil, Mi2) of motors (21, 22) which are in drive mode with a sign different from the motor current measured values (Mil, Mi2) of motors (21, 22) which are in brake mode and have a current direction that is inverse to that of the drive mode.

5. Vehicle according to one of the preceding claims,
**characterised in that**
the monitoring device (50) has a traction switch-off module (52) which is designed such that it evaluates the sign of the drive current measured value (Ma) formed by summation and switches off the drive (20) when at least one drive switch-off condition is met and the sign of the drive current measured value (Ma) indicates the active drive mode of the motors (21, 22) overall.

6. Vehicle according to one of the preceding claims,
**characterised in that**
the traction switch-off module (52) has a signal input (E52a) for inputting a quick-action braking signal (SBS), which in the event of quick-action braking indicates this, and checks the presence of the at least one drive switch-off condition at least also on the basis of said quick-action braking signal (SBS) .

7. Vehicle according to one of the preceding claims,
**characterised in that**
the traction switch-off module (52) has a signal input (E52b) for inputting a remote control signal (FSS), which in the event of remote control of the vehicle indicates this, and checks the presence of the at least one drive switch-off condition at least also on the basis of said remote control signal (FSS).

8. Vehicle according to one of the preceding claims,
**characterised in that**
the traction switch-off module (52) has a signal input (E52c) for inputting an occupied signal (BS), which in the event of an occupied driver's cab indicates this, as well as a signal input (E52d) for inputting a traction release signal (TFS), which in the event of the presence of a driver-side drive command indicates this and checks the presence of the at least one drive switch-off condition at least also on the basis of said two signals mentioned.

9. Vehicle according to one of the preceding claims,
**characterised in that**
the monitoring device (50) has a braking capacity calculation module (53) which at least also determines a braking capacity value (BLW) of the motors (21, 22) on the basis of the drive current measured value (Ma).

10. Vehicle according to one of the preceding claims,
**characterised in that**
- the vehicle has a DC voltage intermediate circuit (40) supplying the motor or motors (21, 22) with electrical energy and
- the vehicle has a braking capacity calculation module (53) which determines a braking capacity value (BLW) of the motors (21, 22) on the basis of the drive current measurement value (Ma) and a voltage measurement value (Mu) indicating the voltage (U) in the DC voltage intermediate circuit (40).

11. Vehicle according to one of the preceding claims,
**characterised in that**
the braking capacity calculation module (53) is directly or indirectly connected to a brake controller of the vehicle and transmits the braking capacity value (BLW) of the motors (21, 22) thereto.

12. Vehicle according to one of the preceding claims,
**characterised in that**
- the vehicle has an electrical switch (60) which in the closed state connects the drive (20) to an energy supply connection of the vehicle and in the open state isolates the drive (20) from the energy supply connection, and
- the monitoring device (50) is connected to the electrical switch (60) and opens it by means of a control signal (ST) when the at least one drive switch-off condition is met and at the same time the drive current measured value (Ma) indicates the active drive mode of the drive (20).

13. Method for operating a vehicle, in particular a rail vehicle, which has a drive (20) and a drive controller connected to the drive (20) and controlling it, wherein in addition to the drive controller a monitoring device (50) is operated independently of the drive controller,
**characterised in that**
the monitoring device (50) is operated such that the drive current of the drive (20) is quantitatively detected therewith and the sign of a drive current measured value (Ma) indicating the drive current is evaluated, wherein the sign of the drive current measured value (Ma) indicates whether the drive (20) is driving or braking the rail vehicle (10), and the drive (20) is switched off when at least one drive switch-off condition is met and at the same time the sign of the drive current measured value (Ma) indicates an active drive mode of the drive (20) driving the rail vehicle.

## Revendications

1. Véhicule, notamment véhicule (10) ferroviaire, comprenant un entraînement ayant un ou plusieurs moteurs (21,22) électriques, un dispositif de commande de l'entraînement en liaison avec l'entraînement (20) et le commandant est un dispositif (50) de contrôle, qui fonctionne indépendamment du dispositif de commande de l'entraînement,
**caractérise en ce que** le dispositif (50) de contrôle est conformé de manière
- à relever quantitativement le courant d'entraînement de l'entraînement (20) et à exploiter le signe d'une valeur (Ma) de mesure du courant d'entraînement, indiquant le courant d'entraînement, le signe de la valeur (Ma) de mesure du courant d'entraînement indiquant si l'entraînement (20) du véhicule (10) ferroviaire entraîne ou freine, et
- à arrêter l'entraînement (20) si au moins une condition d'arrêt de l'entraînement est satisfaite et si, en même temps, le signe de la valeur (Ma) de mesure du courant d'entraînement indique un fonctionnement, actif et entraînant le véhicule ferroviaire, de l'entraînement (20).

2. Véhicule suivant la revendication 1,
**caractérisé en ce que**
- l'entraînement (20) a deux ou plus de deux moteurs (21, 22), et
- le dispositif (50) de contrôle a un module (51) de relevé du courant, qui forme la valeur (Ma) de mesure du courant d'entraînement par sommation de valeurs (Mil, Mi2) de mesure de courant de moteur, qui indiquent les courants (Im1, Im2) passant dans les moteurs (21, 22).

3. Véhicule suivant la revendication 2, **caractérisé en ce que** le module (51) de relevé du courant est conformé de manière à effectuer la sommation, rapporté au signe, en tenant compte du sens respectif des courants (Im1, Im2) des moteurs, les courants (Im1, Im2) du moteur, dont le sens du courant indique une consommation d'énergie du moteur (21, 22) respectif, étant considéré avec un signe autre que des courants (Im1, Im2) des moteurs, dont le sens du courant indique une production d'énergie du moteur (21, 22) respectif.

4. Véhicule suivant l'une des revendications précédentes, **caractérisé en ce que** le module (51) de relevé du courant est conformé de manière à considérer les valeurs (Mil, Mi2) de mesure du courant de moteurs (21, 22), qui se trouvent en fonctionnement d'entraînement lors de l'addition, avec un signe autre que les valeurs (Mil, Mi2) de mesures de courant de moteurs (21, 22), qui se trouvent en fonctionnement de freinage et qui ont un sens du courant contraire par rapport au fonctionnement d'entraînement.

5. Véhicule suivant l'une des revendications précédentes, **caractérisé en ce que** le dispositif (50) de contrôle a un module (52) d'arrêt de la traction, qui est conformé de manière à exploiter le signe de la valeur (Ma) de mesure du courant d'entraînement formée par sommation et à arrêter l'entraînement (20) si au moins une condition d'arrêt de l'entraînement est satisfaite et si le signe de la valeur (Ma) de mesure du courant d'entraînement indique dans son ensemble le fonctionnement actif en entraînement des moteurs (21,22).

6. Véhicule suivant l'une des revendications précédentes, **caractérisé en ce que** le module (52) d'arrêt de la traction a une entrée ((E52a) de signal pour l'entrée d'un signal (SBS) de freinage rapide qui, dans le cas d'un freinage rapide, indique celui-ci et contrôle la présence de la au moins une condition d'arrêt de l'entraînement au moins également à l'aide de ce signal (SBS) de freinage rapide.

7. Véhicule suivant l'une des revendications précédentes, **caractérisé en ce que** le module (52) d'arrêt de la traction a une entrée (E52b) de signal pour l'entrée d'un signal (FSS) de télécommande qui, dans le cas d'une télécommande du véhicule, l'indique, et contrôle la présence de la au moins une condition d'arrêt de l'entraînement, au moins également à l'aide de ce signal (FSS) de télécommande.

8. Véhicule suivant l'une des revendications précédentes, **caractérisé en ce que** le module (52) d'arrêt de la traction a une entrée (E52c) de signal pour l'entrée d'un signal (BS) d'occupation qui, dans le cas d'une cabine de conducteur occupée, l'indique, ainsi qu'une entrée (E52d) de signal pour l'entrée d'un signal (TFS) de déblocage de la traction qui, dans le cas de la présence d'une instruction d'entraînement de la part du conducteur, l'indique et contrôle la présence de la au moins une condition d'arrêt de l'entraînement au moins également à l'aide de ces deux signaux mentionnés.

9. Véhicule suivant l'une des revendications précédentes, **caractérisé en ce que** le dispositif (50) de contrôle a un module (53) de calcul de la puissance du frein, qui détermine, au moins également à l'aide de la valeur (Ma) de mesure du courant d'entraînement, une valeur (BLW) de puissance de frein des moteurs (21, 22).

10. Véhicule suivant l'une des revendications précédentes, **caractérisé en ce que**
- le véhicule a un circuit (40) intermédiaire à tension continu alimentant le ou les moteurs (21, 22) en énergie électrique, et
- le véhicule a un module (53) de calcul de la puissance de frein, qui, à l'aide de la valeur (Ma) de mesure du courant d'entraînement et d'une valeur (Mu) de mesure de la tension indiquant la tension (U) dans le circuit (40) intermédiaire à tension continue, détermine une valeur (BLW) de puissance de frein des moteurs (21, 22).

11. Véhicule suivant l'une des revendications précédentes, **caractérisé en ce que** le module (53) de calcul de la puissance de frein est en liaison indirectement ou directement avec un dispositif de commande de frein du véhicule et lui transmet la valeur (BLW) de puissance de frein des moteurs (21, 22).

12. Véhicule suivant l'une des revendications précédentes, **caractérisé en ce que**
- le véhicule a un interrupteur (60) électrique, qui, lorsqu'il est fermé, relie l'entraînement (20) à une borne d'alimentation en énergie du véhicule et qui, lorsqu'il est ouvert, sépare l'entraînement (20) de la borne d'alimentation en énergie, et
- le dispositif (50) de contrôle est en liaison avec l'interrupteur (60) électrique et l'ouvre au moyen d'un signal (ST) de commande, si la au moins une condition d'arrêt de l'entraînement est satisfaite et si, en même temps, la valeur (Ma) de mesure du courant d'entraînement indique le fonctionnement actif en entraînement de l'entraînement (20).

13. Procédé pour faire fonctionner un véhicule, notamment un véhicule ferroviaire, qui a un entraînement (20) et un dispositif de commande d'entraînement en liaison avec l'entraînement (20) et le commandant, dans lequel, en plus du dispositif de commande de l'entraînement, on fait fonctionner un dispositif (50) de contrôle indépendamment du dispositif de commande de l'entraînement,
**caractérisé en ce que**
on fait fonctionner le dispositif (50) de contrôle de manière à relever quantitativement par celui-ci le courant de l'entraînement (20) et à exploiter le signe d'une valeur (Ma) de mesure du courant d'entraînement, indiquant le courant d'entraînement, le signe de la valeur (Ma) de mesure du courant d'entraînement indiquant si l'entraînement (20) du véhicule (10) ferroviaire entraîne ou freine, et on arrête l'entraînement (20) si au moins une condition d'arrêt de l'entraînement est satisfaite et si,en même temps, le signe de la valeur (Ma) de mesure du courant d'entraînement indique un fonctionnement, actif et entraînant le véhicule ferroviaire, de l'entraînement (20).
